# EUROPÄISCHE PATENTSCHRIFT

(11) **EP 2 118 163 B1**
(45) Veröffentlichungstag und Bekanntmachung des Hinweises auf die Patenterteilung: **28.07.2010**
(21) Anmeldenummer: 08701189.6
(22) Anmeldetag: 02.01.2008
(51) Int. Cl.: C08G 18/16, C08G 18/18, C08G 18/20, C08G 18/48

(54) **WASSERGETRIEBENE HARTSCHAUMSTOFFE FÜR DIE ISOLATION VON FLÜSSIGERDGASTANKS**
WATER-BLOWN RIGID FOAMS FOR THE INSULATION OF LIQUEFIED NATURAL GAS TANKS
MOUSSE DURE GONFLÉE À L'EAU POUR L'ISOLATION DE CUVES POUR GAZ NATUREL LIQUÉFIÉ

(30) Priorität: 09.01.2007 EP 07100285
(43) Veröffentlichungstag der Anmeldung: 18.11.2009
(73) Patentinhaber: BASF SE, 67056 Ludwigshafen (DE)
(72) Erfinder: LEHMANN, Pit, B-2000 Antwerpen (BE); THANE, Katrin, 49152 Bad Essen (DE); HWANG, Cheol-Hyun, Daejeon (KR)
(86) Internationale Anmeldenummer: PCT/EP2008/050001
(87) Internationale Veröffentlichungsnummer: WO 2008/083996

(56) Entgegenhaltungen:
- EP-A- 1 698 649
- US-A- 5 690 855
- US-A- 5 770 635

## Beschreibung

Die vorliegende Erfindung betrifft einen harten Polyurethanschaumstoff, enthaltend Verstärkungsmittel, der erhältlich ist durch Vermischen von (a) Isocyanaten, die eine Viskosität bei 25 °C von kleiner 500 mPas aufweisen, mit (b) Verbindungen mit gegenüber Isocyanaten reaktiven Gruppen, (c) Treibmittel, enthaltend Wasser, (d) Katalysatoren und gegebenenfalls (e) weiteren Additiven zu einer Reaktionsmischung und Auftragen der Reaktionsmischung auf ein Verstärkungsmittel, wobei die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25 °C von 500 mPas oder kleiner enthalten. Weiter betrifft die vorliegende Erfindung ein Verfahren zur Herstellung solcher harten Polyurethanschaumstoffe und die Verwendung der harten Polyurethanschaumstoffe zur Isolation von Flüssigerdgastanks.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Neben Erdöl stellt Erdgas eine der wichtigsten Energiequellen unserer Zeit dar. Um das Gas von den Quellen an den Kunden zu liefern, muss es aber meist über große Distanzen transportiert werden. Dies geschieht beispielsweise über Pipelines. Allerdings ist der Transport von Erdgas über Pipelines in entlegene Gebiete oder über sehr weite Strecken sehr teuer. Dazu kommt, dass es gegebenenfalls aufgrund der politischen Situation in manchen Ländern unmöglich ist, durch diese eine solche Pipeline hindurchzulegen. In solchen Fällen wird als Alternative häufig der Transport über den Seeweg in Erdgastankern (sogenannte LNG-carrier-liquified natural gas carrier) gewählt. Dazu wird das Erdgas an Land verflüssigt und in riesige Tanks an Bord von Schiffen gegeben. Da Erdgas nur bei sehr niedrigen Temperaturen von ca. -160 °C verflüssigt werden kann und auch bei diesen Temperaturen gelagert und transportiert werden muss, ist es erforderlich, die Tanks, speziell an Bord von Schiffen, so gut wie möglich zu isolieren, um den Verlust von Flüssiggas durch Verdampfen gering zu halten.

Als Isolationsmaterial werden vor allem Polyurethanhartschaumstoffe aufgrund ihrer herausragenden Isolationseigenschaften im Vergleich zu anderen Isolationsmaterialien, wie Polystyrolschaumstoff oder Mineralwolle, eingesetzt.

Die gesamte Isolationskonstruktion in Erdgastankern ist äußerst komplex. So muss die Isolierung der Tanks nicht nur das Verdampfen von Erdgas verhindern, sondern muss den Tanks auch ein gewisses Maß an Stabilität bieten. Somit werden neben Polyurethanhartschaumstoff beispielsweise Sperrholz-, Glasfaser- und Edelstahllagen zur Stabilisierung dieser eingesetzt.

Die eigentlichen Tanks bestehen dabei hauptsächlich aus einer sehr dünnen Barriereschicht aus Edelstahl, daher liefert die Isolationsstruktur einen Großteil der benötigten Stabilität. Somit weist der meist eingesetzte Polyurethanhartschaumstoff eine recht hohe Dichte auf. Weiter enthält dieser vorzugsweise Verstärkungsmittel, meist Glasfasermatten (CSM's - continuous strand mats), wodurch die nötigen mechanischen Eigenschaften erhalten werden. Damit die optimale Stabilität gewährt werden kann, ist eine gleichmäßige Verteilung dieser Glasfasermatten über die gesamte Dicke des Schaumstoffs ein wichtiger Parameter.

Solche Isolationskonstruktionen sind beispielsweise in den koreanischen Patentschriften KR 2000010021 und KR 2000010022, den japanischen Patentschriften JP 2003240198 und JP 2001150558, den US-Patentschriften US 20050115248, US 3319431 und US 3341050 sowie der europäischen Anmeldung EP 1698649 beschrieben.

Die Herstellung der Polyurethanhartschaumisolationselemente erfolgt dabei meist kontinuierlich auf einem Förderband. Dabei sind die Trommeln, enthaltend die zur Verstärkung nötigen Glasfasermatten, am Beginn des Bands deponiert und werden kontinuierlich auf das Band abgerollt. Auf diese Glasfasermatten wird die Polyurethanreaktionsmischung gegeben. Die reagierende Polyurethanreaktionsmischung muss in die Glasfasermatten eindringen, bevor der Schaum durch die Treibreaktion zu steigen beginnt.

Um eine gute und schnelle Verarbeitbarkeit zu gewähren, muss die Penetration der Reaktionsmischung in die Glasfasermatten so schnell wie möglich erfolgen. Dies hat den Vorteil, dass die Reaktionsmischung sich gleichmäßig zwischen den Glasfasermatten verteilen kann, wodurch die gleichmäßige Verteilung der Glasfasermatten im fertigen Polyurethanhartschaumstoff begünstigt wird.

Weiter muss der Schaum möglichst langsam und gleichmäßig aufschäumen, um die gleichmäßige Verteilung der Glasfasermatten im Polyurethanhartschaumstoff weiter zu begünstigen.

Als Treibmittel werden meist halogenierte Treibmittel, wie Fluorchlorkohlenwasserstoffe und Fluorkohlenwasserstoffe eingesetzt, da so Schaumstoffe mit einer besonders geringen Wärmeleitfähigkeit erhalten werden. Allerdings sind Fluorchlorkohlenwasserstoffe verantwortlich für den Abbau der Ozonschicht und sowohl Fluorchlorkohlenwasserstoffe als auch Fluorkohlenwasserstoffe sind Gase, die mit zur globalen Erwärmung beitragen. Daher muss nach Alternativen gesucht werden.

Treibmittel, wie Kohlenwasserstoffe (beispielsweise Pentan), sind aufgrund ihrer Entflammbarkeit nicht sonderlich geeignet.

EP 1698649 offenbart in den Beispielen 4 und 5 die Herstelung von Polyurethanschaumstoff, der zur Isolation von Flüssigerdgastanks an Bord von Tankern geeignet ist, wobei als Treibmittel Wasser eingesetzt wird. Dabei werden als Polyolkomponente eine Mischung, bestehend aus 60 Gew.-% eines auf Sorbitol basierten Polyetherols mit einer Viskosität bei 20 bis 30 °C von 3000 bis 5000 mPas, 20 Gew.-% eines Glycerin basierten Polyetherols mit einer Viskosität bei 20 bis 30 °C vom 200 bis 400 mPas und 20 Gew.-% eines difunktionellen Polyesterpolyols mit einer Viskosität von 4000 bis 6000 mPas eingesetzt. Als Katalysator wird eine Mischung aus einem Zinn basierten Katalysator und Kaliumoctoat eingesetzt. Nachteile einer Formulierung nach EP 1698649 sind eine relativ hohe Wärmeleitfähigkeit und einer schnelle Startzeit der Reaktionsmischung bei gleicher Abbindezeit, wodurch eine gleichmäßige Verteilung der Glasfasermatten erschwert wird.

Aufgabe war es daher, einen harten Polyurethanschaumstoff zu liefern, der zur Isolation von Flüssigerdgastanks an Bord von Tankern geeignet ist, wobei die als Treibmittel eingesetzten Fluorchlorkohlenwasserstoffe oder Fluorkohlenwasserstoffe ganz oder teilweise durch alternative Treibmittel ersetzt sind. Weiter war es Aufgabe der vorliegenden Erfindung einen solchen Polyurethanhartschaumstoff zur Verfügung zu stellen, der gute mechanische Eigenschaften, wie hohe Druckfestigkeit, ein hohes Youngmodul, und eine hohe Scherfestigkeit, eine gleichmäßige Verteilung der enthaltenen Verstärkungsmittel, eine gute Schaumqualität und eine geringe Wärmeleitfähigkeit aufweist.

Die erfindungsgemäße Aufgabe wird gelöst durch einen harten Polyurethanschaumstoff unit der in Anspruch 1 genannten Dichte, enthaltend Verstärkungsmittel, der erhältlich ist durch Vermischen von (a) Isocyanaten, die eine Viskosität bei 25°C von kleiner 500 mPas aufweisen, mit (b) Verbindungen mit gegenüber Isocyanaten reaktiven Gruppen, (c) Treibmittel, enthaltend Wasser, (d) Katalysatoren und gegebenenfalls (e) weiteren Additiven, Auftragen der Reaktionsmischung auf das Verstärkungsmittel und Aushärten, wobei die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25°C von 500 mPas oder kleiner enthalten.

Als Isocyanate (a) können alle gewöhnlichen aliphatischen, cycloaliphatischen und bevorzugt aromatische Di- und/oder Polyisocyanate verwendet werden, die eine Viskosität von weniger als 500mPas, bevorzugt von weniger als 350 mPas, gemessen bei 25 °C, aufweisen. Besonders bevorzugt werden als Isocyanate Toluoldiisocyanat (TDI) und Diphenylmethandiisocyanat (MDI) und insbesondere Mischungen aus Diphenylmethandiisocyanat und polymerem Diphenylmethandiisocyanat (PMDI). Diese besonders bevorzugten Isocyanate können ganz oder teilweise mit Uretdion-, Carbamat-Isocyanurat, Carbodiimid-, Allophanat und bevorzugt Urethangruppen modifiziert sein.

Weiterhin können als Isocyanatkomponente Prepolymere eingesetzt werden. Diese Prepolymere werden aus den oben beschriebenen Isocyanaten sowie den weiter unten beschriebenen Polyethern, Polyestern oder beiden hergestellt und weisen einen NCO-Gehalt von 20 bis 30 Gew.-%, bevorzugt 22 bis 28 Gew.-%, auf.

Als Verbindungen mit gegenüber Isocyanaten reaktiven Gruppen (b) können alle Verbindungen eingesetzt werden, die zumindest zwei gegenüber Isocyanaten reaktive Gruppen, wie OH-, SH-, NH- und CH-acide Gruppen aufweisen. Gewöhnlich werden Polyetherole und/oder Polyesterole mit 2 bis 8 mit Isocyanat reaktiven Wasserstoffatomen eingesetzt. Die OH-Zahl dieser Verbindungen liegt üblicherweise im Bereich von 30 bis 850 mg KOH /g, vorzugsweise im Bereich von 80 und 600 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation LewisSäuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol%.

Die eingesetzten Polyesterole haben vorzugsweise eine Funktionalität von 1,5 bis 5, besonders bevorzugt 1,8 - 3,5 und insbesondere von 1,9 bis 2,2.

Ferner können als Verbindung mit gegenüber Isocyanaten reaktiven Gruppen (b) Kettenverlängerungs- und/oder Vernetzungsmittel eingesetzt werden. Als Kettenverlängerungs- und/oder Vernetzungsmittel kommen insbesondere zwei- oder dreifunktionelle Amine und Alkohole, insbesondere Diole, Triole oder beide, jeweils mit Molekulargewichten kleiner als 400, vorzugsweise von 60 bis 300, zum Einsatz.

Dabei enthalten die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25°C von 500 mPas oder kleiner, bevorzugt 300 mPas oder kleiner. Besonders bevorzugt weist das Polyetherol b2) eine Funktionalität von kleiner 2,5 auf und wird insbesondere ausgehend von difunktionellen Startermolekülen hergestellt. Dabei beträgt der Anteil des Polyetherols (b1) vorzugsweise 30 bis 80, besonders bevorzugt 40 bis 70 Gew.-%, bezogen auf das Gesamtgewicht der Komponenten (b1) und (b2).

In einer weiteren Ausführungsform enthalten die Verbindungen mit gegenüber Isocyanaten reaktiven Gruppen (b) neben dem Polyetherol (b1) und dem Polyetherol (b2) ein Polyesterol (b3) mit einer Viskosität bei 25 °C von 2000 mPas oder kleiner.

Der Anteil der Polyetherole (b1), (b2) und gegebenenfalls (b3) an der Verbindung mit gegenüber Isocyanaten reaktiven Gruppen (b) beträgt vorzugsweise zumindest 80 Gew.-%, besonders bevorzugt zumindest 90 Gew.-% und insbesondere 100 Gew.-%, bezogen auf das Gesamtgewicht der Verbindung mit gegenüber Isocyanaten reaktiven Gruppen (b).

Als Treibmittel (c) wird Treibmittel, enthaltend Wasser, eingesetzt. Dabei kann Wasser alleine oder in Kombination mit weiteren Treibmitteln eingesetzt werden. Der Gehalt an Wasser im Treibmittel (c) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (c). Insbesondere wird Wasser als alleiniges Treibmittel eingesetzt. Werden neben Wasser weitere Treibmittel eingesetzt, können beispielsweise Fluorchlorkohlenwasserstoffe, Fluorkohlenwasserstoffe, Kohlenwasserstoffe, Säuren und flüssiges bzw. gelöstes Kohlendioxid verwendet werden. Vorzugsweise enthalten Treibmittel (c) weniger als 50 Gew.-%, mehr bevorzugt weniger als 20 Gew.-%, besonders bevorzugt weniger als 10 Gew.-% und insbesondere 0 Gew.%, bezogen auf das Gesamtgewicht des Treibmittels (c), Fluorchlorkohlenwasserstoffe, Fluorkohlenwasserstoffe und/oder Kohlenwasserstoffe. In einer weiteren Ausführungsform kann als Treibmittel (c) eine Mischung aus Wasser und Ameisensäure und/oder Kohlendioxid eingesetzt werden. Um das Treibmittel einfacher in der Polyolkomponente dispergieren zu können, kann das Treibmittel (c) mit polaren Verbindungen, wie Dipropylenglycol, vermischt sein.

Die Treibmittel (c) werden in einer solchen Menge eingesetzt, dass die Dichte des harten Polyurethanschaumstoffs, der durch Reaktion der Komponenten (a) bis (e) entsteht, ohne Berücksichtigung des Verstärkungsmittels, im Bereich von 50 - 200, vorzugsweise 80 - 120 g/L liegt.

Als Katalysatoren (d) wird eine Mischung eingesetzt, die zumindest ein tertiäres Amin enthält, welches die Isocyanat-Wasser-Reaktion oder die Isocyanat-Polyol-Reaktion beschleunigt. Solche Katalysatoren werden beispielsweise im "Kunststoffhandbuch, Band 7, Polyurethane", Carl Hanser Verlag, 3. Auflage 1993, Kapitel 3.4.1 beschrieben. Bei diesen tertiären Aminen handelt es sich gewöhnlich um Verbindungen, die auch gegenüber Isocyanat reaktiven Gruppen, wie OH-, NH- oder NH₂ Gruppen, tragen können. Einige der am häufigsten eingesetzten Katalysatoren sind Bis-2-Dimethylaminoethylether, N,N,N,N,N-Pentamethyldiethylentriamin, N,N,N-Triethylamino-ethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, tris-Dimethylaminopropylhexahydrotriazin, Dimethylaminopropylamin, N-Ethylmorpholin, Diazabicycloundecen und Diazabicyclononen. Vorzugsweise werden als Katalysatoren (d) Mischungen eingesetzt, die zumindest zwei unterschiedliche tertiäre Amine enthalten. Besonders bevorzugt enthält die Katalysatormischung (d) Dimethylcyclohexylamin (d1) und ein bicyclisches Amin (d2) oder Dimethylcyclohexylamin (d1) und ein monocyclisches Amin (d3). Dabei beträgt das Verhältnis von Dimethylcyclohexylamin (d1) und bicyclischem Amin (d2) oder Dimethylcyclohexylamin (d1) und monocyclischen Amin (d3) vorzugsweise 0,2 bis 4 zu 1, besonders bevorzugt 0,5 bis 1,5 zu 1. Vorzugsweise sind die cyclischen Amine d2) und d3) aus den oben angegebenen cyclischen Aminen ausgewählt.

Weiter kann die Katalysatormischung (d) weitere Verbindungen enthalten, welche die die Isocyanat-Wasser-Reaktion oder die Isocyanat-Polyol-Reaktion beschleunigen. Dabei handelt es sich beispielsweise um Katalysatoren auf Basis von organischen Metallverbindungen, wie organischen Zinnverbindungen, beispielsweise Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinn-maleat und Dioctylzinndiacetat, sowie Bismutcarboxylate, wie Bismut(III)-neodecanoat, Bismut-2-ethylhexanoat und Bismut-octanoat oder Alkalisalze von Carbonsäuren, wie Kaliumacetat oder Kaliumformiat.

Der Anteil von Dimethylcyclohexylamin (d1), bicyclischen Amin (d2) und monocyclischen Amin (d3) an der Katalysatormischung (d) beträgt vorzugsweise zumindest 80 Gew.-%, besonders bevorzugt zumindest 90 Gew.-% und insbesondere 100 Gew.-%, bezogen auf das Gesamtgewicht der Katalysatoren (d).

Als Verstärkungsmittel können alle Materialien eingesetzt werden, die dem harten Polyurethanschaumstoff eine noch höhere mechanische Stabilität verleihen. Solche Verstärkungsmittel sind beispielsweise Glasfasern, Glasfasermatten oder Kohlefasermatten, bevorzugt Glasfasermatten, beispielsweise Unifilio® U801 der Firma Saint Gobain Vetrotex.

Als weitere Additive (e) können Schaumstabilisatoren, Flammschutzmittel, weitere Füllstoffe und sonstige Zusatzstoffe, wie Antioxidantien eingesetzt werden.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4, besonders bevorzugt 1 bis 3 Gew.-%, bezogen auf das Gesamtgewicht der Komponenten (b) bis (e), verwendet.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfingdungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (b) bis (e) verwendet.

Als weitere Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Verwendet werden können auch Glasmikrohohlkugeln. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 30 Gew.%, vorzugsweise 1 bis 15 Gew.%, bezogen auf das Gewicht der Komponenten (a) bis (e), einverleibt.

Die Erfindung betrifft weiter ein Verfahren zur Herstellung von harten Polyurethanschaumstoffen unit der in Anspruch 16 genannten Dichte, bei dem man (a) Isocyanate mit (b) Verbindungen mit gegenüber Isocyanaten reaktiven Gruppen, (c) Treibmittel, enthaltend Wasser, (d) Katalysatoren und gegebenenfalls (e) weitere Additive, zu einer Reaktionsmischung vermischt, auf Verstärkungsmittel aufträgt und zu dem Polyurethanschaum aushärtet, wobei die Isocyanate (a) eine Viskosität bei 25°C von kleiner 500 mPas aufweisen, die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25°C von 500 mPas oder kleiner enthalten.

Vorzugsweise erfolgt die Herstellung des erfindungsgemäßen harten Polyurethanschaumstoffs kontinuierlich auf einem Band. Dazu werden vorzugsweise die Komponenten (b) bis (d) und gegebenenfalls (e) zu einer Polyolkomponente vermischt. Diese werden anschließend vorzugsweise in einer Niederdruckmischvorrichtung, einer Hochdruckmischvorrichtung bei vermindertem Druck von kleiner 100 bar oder einer Hochdruckmaschine mit der Isocyanat-Komponente (a) vermischt. Alternativ können auch die Komponenten (a) bis (d) und gegebenenfalls (e) jeweils einzeln in die Mischvorrichtung gegeben werden. Anschließend wird die so erhaltene Reaktionsmischung auf das Verstärkungsmittel, vorzugsweise auf die Glasfasermatten gegeben, die vorzugsweise von mehreren Trommeln (beispielweise 5-10, bevorzugt 6 oder 7) kontinuierlich auf das Band abgerollt werden und dort eine entsprechende Anzahl an Lagen bilden. Anschließend wird der erhaltene Schaum vorzugsweise auf dem Band soweit ausgehärtet, dass dieser ohne Beschädigung in Stücke geschnitten werden kann. Dies kann bei erhöhten Temperaturen, beispielsweise beim Durchlauf durch einen Ofen, erfolgen. Die erhaltenen Schaumstücke werden dann vorzugsweise weiter gelagert, um die volle mechanische Belastbarkeit zu erhalten.

Anschließend wird der erhaltene Polyurethanhartschaumstoff zum Isolationspaneel weiterverarbeitet. Dazu werden die erhaltenen Stücke des erfindungsgemäßen harten Polyurethanschaumstoffs auf Maß geschnitten und vorzugsweise zusammen mit Sperrholzplatten und harzgetränkten Glasfasermatten verklebt. Diese Polyurethanschaumstoffelemente werden dann mit weiteren Hilfsmitteln, wie Eisenplatten, Schrauben und Fäden ausgestattet, um die fertigen Isolationselemente herzustellen, die dann direkt bei der Herstellung der Isolationsbarriere des Flüssigerdgastanks eingesetzt werden. Eine detaillierte Beschreibung der Herstellung solcher Isolationspaneelen ist beispielsweise auf der Homepage der Firmen Finetec und Kangrim (Korea).

Isocyanate (a) und Verbindungen mit gegenüber Isocyanat reaktiven Gruppen (b), Treibmittel, enthaltend Wasser (c), Katalysatoren (d) und gegebenenfalls weitere Additive (e) werden vorzugsweise in solchen Mengen zur Umsetzung gebracht, dass der Isocyanatindex im Bereich von 100 bis 400, bevorzugt 100 - 180, besonders bevorzugt 110 - 160 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Besonders vorteilhaft ist, dass die erfindungsgemäßen Reaktionsmischungen schnell in die Verstärkungsmittel eindringen und dadurch eine gleichmäßige Verteilung der Verstärkungsmittel im erhaltenen Polyurethanhartschaumstoff begünstigt wird. Ebenfalls vorteilhaft ist die lange Startzeit der erfindungsgemäßen Reaktionsmischungen bei kurzer Reaktionszeit.

Erfindungsgemäße harte Polyurethanschaumstoffe werden vorzugsweise zu Isolationszwecken eingesetzt. Besonders bevorzugt werden erfindungsgemäße, harte Polyurethanschaumstoffe zur Isolation von Flüssigerdgastanks, insbesondere an Bord von Schiffen (LNG-carrier), eingesetzt. Diese sind mechanisch stabil, weisen eine geringe Wärmeleitfähigkeit auf, zeigen hervorragende Schaumeigenschaften, beispielsweise ohne Löcher und Risse, haben gute mechanische Eigenschaften und weisen eine gleichmäßige Verteilung der Schichten von Verstärkungsmitteln auf.

Anhand der folgenden Beispiele sollen die Vorteile der Erfindung verdeutlicht werden.

### Beispiele

Zur Herstellung der erfindungsgemäßen Polyurethanhartschaumstoffe gemäß Beispiel 1 bis 5 sowie der Vergleichsbeispiele V1 bis V4 wurden die verwendeten Polyole gemäß Tabelle 1 mit Katalysatoren, Stabilisator und Treibmittel verrührt anschließend mit dem Isocyanat vermischt und zum Polyurethanhartschaumstoff verschäumt. Dabei war die Abbindezeitzeit mittels Anpassung der Katalysatormenge jeweils auf 540 Sekunden eingestellt. Durch das Treibmittel wurde eine konstante Schaumrohdichte von 100 g/L eingestellt.

Die Zusammensetzung der Reaktionsmischung zur Herstellung der harten Polyurethanschäume gemäß Beispiel 1 bis 5 sowie den Vergleichsbeispielen V1 bis V4 sind in der Tabelle 1 angegeben.

**Tabelle 1**

| Beispiel | 1 | 2 | 3 | 4 | 5 | V 1 | V 2 | V3 | V4 |
|---|---|---|---|---|---|---|---|---|---|
| Polyol 1 | | | | | | 60 | | | |
| Polyol 2 | 60 | 60 | 60 | 60 | | | 60 | 60 | |
| Polyol 3 | 38 | 38 | 38 | | | 38 | 38 | 38 | |
| Polyol 4 | | | | 38 | | | | | |
| Polyol 5 | | | | | 60 | | | | 60 |
| Polyol 6 | | | | | 20 | | | | 20 |
| Polyol 7 | | | | | 20 | | | | 20 |
| | | | | | | | | | |
| Isocyanat 1 | 140 | 140 | 140 | 140 | 150 | 140 | 140 | | 150 |
| Isocyanat 2 | | | | | | | | 140 | |
| | | | | | | | | | |
| Katalysator 1 | 0,1 | 0,1 | 0,1 | 0,1 | 0,1 | 0,1 | 0,2 | 0,1 | |
| Katalysator 2 | 0,1 | | | 0,1 | 0,1 | 0,1 | | 0,1 | |
| Katalysator 3 | | 0,1 | | | | | | | |
| Katalysator 4 | | | 0,1 | | | | | | |
| Katalysator 5 | | | | | | | | | 0,2 |
| Zusatzmittel 1 | | | | | 10 | | | | 10 |
| Stabilisator 1 | 2 | 2 | 2 | 2 | 1 | 2 | 2 | 2 | 1 |
| Treibmittel 1 | 1,7 | 1,7 | 1,7 | 1,7 | 1,5 | 1,7 | 1,7 | 1,7 | 1,5 |

Dabei wurden folgende Einsatzstoffe verwendet:
- Polyol 1:: sorbitolbasiertes Polyetherol, Funktionalität = 5, OH-Zahl = 500 mg KOH/g, Viskosität = 22000 mPas
- Polyol 2:: zuckerbasiertes, co-initiiertes Polyetherol, Funktionalität = 4,4, OH-Zahl = 500 mg KOH/g Viskosität = 8000 mPas
- Polyol 3:: propylenglycolbasiertes Polyetherol, Funktionalität = 2, OH-Zahl = 100 mg KOH/g, Viskosität = 150 mPas
- Polyol 4:: glycerinbasiertes Polyetherol, Funktionalität = 3, OH-Zahl = 400 mg KOH/g, Viskosität = 370 mPas
- Polyol 5:: sorbitolbasiertes, co-initiiertes Polyetherol, Funktionalität = 4,2, OH-Zahl = 490 mg KOH/g, Viskosität = 5000 mPas
- Polyol 6:: Glycerinbasiertes Polyetherol, funktionalität =3, OH-Zahl = 250 mg KOH/g, Viskosität = 300 mPas
- Polyol 7:: Phthalsäureanhydrid -basiertes Polyesterol, Funktionalität = 2, OHZ = 240 mg KOH/g, Viskosität = 3000 mPas (die Viskositätsangaben beziehen sich jeweils auf die Viskosität bei 25°C)
- Isocyanat 1:: polymeres Methylendiphenyldiisocyanat (PMDI), Viskosität = 200 mPas, (Lupranat M 20 S der BASF AG)
- Isocyanat 2:: polymeres Methylendiphenyldiisocyanat (PMDI), Viskosität = 500 mPas (Lupranat M 50 der BASF AG)
(die Viskositätsangaben beziehen sich jeweils auf die Viskosität bei 25°C)
Katalysator 1: Dimethylcyclohexylamin
Katalysator 2: Bicyclisches Amin (Diazabicycloundecen)
Katalysator 3: Mono-cyclisches Amin (N-Methylimidazol)
Katalysator 4: nicht-cyclisches Amin (N,N,N,N,N-Pentamethyldiethylentriamin)
Katalysator 5: Gemisch aus Dibutyl-Zinndilaurat und Kaliumoctoat
Zusatzmittel 1: Phosphorhaltiges Flammschutzmittel
Stabilisator 1: siliconhaltiger Schaumstabilisator
Treibmittel 1: Mischung, enthaltend 60% Wasser und 40% Dipropylenglycol

In einer Form wurden Polyurethanhartschaumstoffe der Dimension 225mm x 225 mm x 225 mm hergestellt. Nach dem Aushärten wurden die Prüfkörper zur Bestimmung der thermischen Leitfähigkeit, der Druckfestigkeit sowie des Youngmoduls entsprechend den angegebenen Normen aus diesem Würfel herausgesägt.

Die thermische Leitfähigkeit wurde ein Tag nach der Herstellung der Polyurethanhartschaumstoffe nach DIN 52612 bei 23,4 °C bestimmt. Druckfestigkeit und der Youngmodul wurden senkrecht zur Schäumrichtung (in x/y-Richtung) gemäß DIN 53421 / DIN EN ISO 604 gemessen.

Die Scherfestigkeit wurde an Probekörpern von 170 mm x 35 mm x 17 mm gemäß DIN 53427 bei 25 °C und einer Zuggeschwindigkeit vom 1 mm / Minute senkrecht zur Schäumrichtung (in x/y-Richtung) bestimmt.

Die Verteilung der Glasfasermatten in den erhaltenen Polyurethanschaumkörpern wurde ebenfalls an einem Würfel mit den oben genannten Abmessungen ermittelt. Die Penetrationszeit der Reaktionsmischung in die Glasfasermatten wurde bestimmt, indem 7 Glasfasermatten (20 x 20 cm, Unifilio® U 801 der Firma Saint Gobain Vetrotex, als CSM bezeichnet) auf den Boden einer Form gegeben und mir der Reaktionsmischung übergossen wurden. Die oberste der 7 Glasfasermatten war dazu an 5 Punkten markiert. Als Penetrationszeit wurde die Zeit angegeben, die nötig war, damit zumindest 4 der 5 markierten Punkte nach dem Auftragen der Reaktonsmischung wieder sichtbar wurden. Nach dem Aushärten dieser Probe wurde diese senkrecht zu den Glasfasermatten zerteilt und die Abstände der benachbarten Glasfasermatten wurden bestimmt. Es wurden der mittlere Abstand der Glasfasermatten sowie die Standardabweichung berechnet. Die Standardabweichung sollte bei einer gleichmäßigen Verteilung der Matten möglichst klein sein.

Die Schaumqualität wurde visuell bestimmt. Dabei wurde vor allem beurteilt, ob der erhaltene Schaum Risse oder Löcher aufweist.

Die Bestimmung der Startzeit und des Starts des Temperaturanstiegs erfolgte mittels eines Schaumqualifizierungssystems mit Ultraschallsensor für Schaumanstieg und Thermofühler. Der Schaum- und Temperaturanstieg wird über die Zeit aufgenommen. Startzeit wird definiert als der Zeitpunkt, an dem 15% der maximalen Steiggeschwindigkeit erreicht wird.

Die so bestimmten Schaumeigenschaften sind in Tabelle 2 wiedergegeben.

**Tabelle 2**

| Beispiel | 1 | 2 | 3 | 4 | 5 | V 1 | V 2 | V 3 | V4 |
|---|---|---|---|---|---|---|---|---|---|
| Dichte [g/L] | 100 | 100 | 100 | 100 | 100 | 100 | 100 | 100 | 100 |
| Druckfestigkeit [N/mm²] | 0,98 | 1,02 | - | - | 0,82 | 1,05 | - | 1,08 | 0,83 |
| Youngmodul [N/mm²] | 28,8 | 28,4 | - | - | 24,5 | 27,8 | - | 28,7 | 22,7 |
| Thermische Leitfähigkeit [mW/mK] | 27,3 | 27,3 | 27,3 | 27,4 | 29,3 | 27,5 | 27,4 | 27,8 | 30,6 |
| Scherfestigkeit [MPa] | 0,9 | 0,77 | 0,75 | 0,7 | 0,78 | 0,65 | 0,2 | 0,73 | 0,8 |
| Penetrationszeit [s] | 64 | 82 | 100 | 120 | 120 | 150 | 105 | 215 | 126 |
| mittlerer Abstand der benachbarten CSM's [mm] | 32,8 | 37 | 34,5 | 36 | 40 | 35 | 34 | 34,5 | 40,3 |
| Standardabweichung des CSM-Lagen-Abstand | 2,5 | 1,7 | 3,0 | 2,8 | 2,7 | 3,2 | 4,2 | 3,5 | 4,3 |
| Schaumqualität | ++ | ++ | + | + | + | - | - | - | + |
| Startzeit [s] | | | | | 157 | | | | 145 |
| beginnender Temperaturanstieg bei [s] | | | | | 282 | | | | 230 |

Gemäß Tabelle ist ersichtlich, dass die erfindungsgemäßen Polyurethanhartschäume eine besonders hohe Scherfestigkeit bei guter oder sehr guter Schaumqualität und kurzer Penetrationszeit zeigen. Auch die Standardabweichung des CSM-Lagenabstands ist für erfindungsgemäße Polyurethanhartschaumstoffe geringer als für Schäume gemäß den Vergleichsversuchen. Insbesondere ein Vergleich der Beispiele 5 und V4 zeigt eine deutliche Verbesserung der Wärmeleitfähigkeit und der Standardabweichung des CSM-Lagenabstands sowie eine Verlängerung der Startzeit sowie der Zeit bis zum Beginn des Temperaturanstiegs bei Verwendung von Aminkatalysator anstelle eines Katalysatorsystems auf Basis von Zinnkatalysatoren und Kaliumokoat.

## Patentansprüche

1. Harter Polyurethanschaumstoff, enthaltend Verstärkungsmittel, wobei die mittlere Dichte des Polyurethanschaumstoffs ohne Verstärkungsmittel im Bereich von 50 - 200 g/L liegt, erhältlich durch Vermischen von
a) Isocyanaten
b) Verbindungen mit gegenüber Isocyanaten reaktiven Gruppen
c) Treibmittel, enthaltend Wasser,
d) einer Katalysatormischung, enthaltend tertiäre Amine und gegebenenfalls
e) weiteren Additiven,
Auftragen der Reaktionsmischung auf ein Verstärkungsmittel und aushärten der
Reaktionsmischung,
wobei die Isocyanate (a) eine Viskosität von kleiner 500 mPas bei 25 °C aufweisen und
die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25°C von 500 mPas oder kleiner enthalten.

2. Harter Polyurethanschaumstoff nach Anspruch 1, **dadurch gekennzeichnet, dass** die Viskosität des Polyetherols (b2) bei 25 °C 300 mPas oder kleiner ist.

3. Harter Polyurethanschaumstoff nach Anspruch 1 oder 2, **dadurch gekennzeichnet, dass** der Anteil des Polyetherols (b1) 30 bis 80, vorzugsweise 40 bis 70 Gew.-%, bezogen auf das Gesamtgewicht der Komponenten (b1) und (b2), beträgt.

4. Harter Polyurethanschaumstoff nach einem der Ansprüche 1 bis 3, **dadurch gekennzeichnet, dass** das Polyetherol (b2) ausschließlich ausgehend von difunktionellen Startermolekülen hergestellt wurde.

5. Harter Polyurethanschaumstoff nach einem der Ansprüche 1 bis 4, **dadurch gekennzeichnet, dass** die Verbindungen mit gegenüber Isocyanaten reaktiven Gruppen (b) des weiteren (b3) ein Polyesterol mit einer Viskosität bei 25 °C von 2000 mPas oder kleiner enthalten.

6. Harter Polyurethanschaumstoff nach einem der Ansprüche 1 bis 5, **dadurch gekennzeichnet, dass** der Anteil der Polyetherole (b1), (b2) und gegebenenfalls
(b3) an der Verbindung mit gegenüber Isocyanaten reaktiven Gruppen (b) zumindest 80 Gew.-%, bezogen auf das Gesamtgewicht der Verbindung mit gegenüber Isocyanaten reaktiven Gruppen (b), beträgt.

7. Harter Polyurethanschaumstoff nach Anspruch 6, **dadurch gekennzeichnet, dass** der Anteil der Polyetherole (b1), (b2) und gegebenenfalls (b3) an der Ver bindung mit gegenüber Isocyanaten reaktiven Gruppen (b) 100 Gew.-%, bezogen auf das Gesamtgewicht der Verbindung mit gegenüber Isocyanaten reaktiven Gruppen (b), beträgt.

8. Harter Polyurethanschaumstoff nach einem der Ansprüche 1 bis 7, **dadurch gekennzeichnet, dass** die Katalysatormischung (d) Dimethylcyclohexylamin (d1) und ein bicyclisches Amin (d2) oder Dimethylcyclohexylamin (d1) und ein monocyclisches Amin (d3) enthält.

9. Harter Polyurethanschaumstoff nach Anspruch 8, **dadurch gekennzeichnet, dass** das Verhältnis von Dimethylcyclohexylamin (d1) und dem bicyclischen Amin (d2) oder Dimethylcyclohexylamin (d1) und dem monocyclischen Amin (d3) 0,2 bis 4 zu 1 beträgt.

10. Harter Polyurethanschaumstoff nach Anspruch 9, **dadurch gekennzeichnet, dass** das Verhältnis von Dimethylcyclohexylamin (d1) und dem bicyclischen Amin (d2) oder Dimethylcyclohexylamin (d1) und dem monocyclischen Amin (d3) 0,5 bis 1,5 zu 1 beträgt.

11. Harter Polyurethanschaumstoff nach einem der Ansprüche 1 bis 10, **dadurch gekennzeichnet, dass** das Isocyanat (a) eine Viskosität bei 25 °C von kleiner als 350 mPas aufweist.

12. Harter Polyurethanschaumstoff nach einem der Ansprüche 1 bis 11, **dadurch gekennzeichnet, dass** Wasser das einzige Treibmittel ist.

13. Harter Polyurettianschaumstoff nach einem der Ansprüche 1 bis 12, **dadurch gekennzeichnet, dass** die mittlere Dichte des Polyurethanschaumstoffs ohne Verstärkungsmittel im Bereich von 80 - 120 g/L liegt.

14. Harter Polyurethanschaumstoff nach einem der Ansprüche 1 bis 13, **dadurch gekennzeichnet, dass** das Verstärkungsmittel Glasfasermatten sind.

15. Harter Polyurethanschaumstoff nach einem der Ansprüche 1 bis 14, **dadurch gekennzeichnet, dass** der Isocyanatindex im Bereich von 100 bis 400 liegt.

16. Verfahren zur Herstellung von harten Polyurethanschaumstoffen, wobei die mittlere Dichte des Polyurethanschaumstoffs ohne Verstärkungsmittel im Bereich von 50 - 200 g/L liegt, enthaltend Verstärkungsmittel, bei dem man
a) Isocyanate mit
b) Verbindungen mit gegenüber Isocyanaten reaktiven Gruppen,
c) Treibmittel, enthaltend Wasser,
d) einer Katalysatormischung, enthaltend tertäre Amine, und gegebenenfalls
e) weitere Additive,
zu einer Reaktionsmischung vermischt, auf Verstärkungsmittel aufträgt und zu dem Polyurethanschaumstoff aushärtet, wobei
die Isocyanate (a) eine Viskosität von kleiner 500 mPas bei 25 °C aufweisen und
die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3 oder kleiner und einer Viskosität bei 25°C von 500 mPas oder kleiner enthalten.

17. Verfahren nach Anspruch 16, **dadurch gekennzeichnet, dass** der Hartschaumstoff, enthaltend Verstärkungsmittel, kontinuierlich auf einem Band hergestellt wird.

18. Verfahren nach Anspruch 17, **dadurch gekennzeichnet, dass** zunächst das Verstärkungsmittel kontinuierlich auf das Band gegeben wird, und im Anschluss die Reaktionsmischung kontinuierlich auf das Verstärkungsmittel gegeben wird.

19. Verwendung eines Polyurethanhartschaumstoffs nach einem der Ansprüche 1 bis 15 zur Isolation von Flüssigerdgastanks, insbsondere auf Schiffen.

## Claims

1. A rigid polyurethane foam comprising reinforcing material, where the mean density of the polyurethane foam without reinforcing material is in the range 50-200 g/l, which can be obtained by mixing
a) isocyanates,
b) compounds having groups which are reactive toward isocyanates,
c) blowing agents comprising water,
d) a catalyst mixture comprising tertiary amines and, if appropriate,
e) further additives,
applying the reaction mixture to a reinforcing material and curing the reaction mixture,
wherein the isocyanates (a) have a viscosity of less than 500 mPas at 25°C and
the compounds (b) having groups which are reactive toward isocyanates comprise a polyetherol (b1) having a functionality of 4 or more and a viscosity at 25°C of 10 000 mPas or less and a polyetherol (b2) having a functionality of 3 or less and a viscosity at 25°C of 500 mPas or less.

2. The rigid polyurethane foam according to claim 1, wherein the viscosity of the polyetherol (b2) at 25°C is 300 mPas or less.

3. The rigid polyurethane foam according to claim 1 or 2, wherein the proportion of the polyetherol (b1) is from 30 to 80% by weight, preferably from 40 to 70% by weight, based on the total weight of the components (b1) and (b2).

4. The rigid polyurethane foam according to any of claims 1 to 3, wherein the polyetherol (b2) has been prepared exclusively from bifunctional starter molecules.

5. The rigid polyurethane foam according to any of claims 1 to 4, wherein the compounds (b) having groups which are reactive toward isocyanates further comprise (b3) a polyesterol having a viscosity at 25°C of 2000 mPas or less.

6. The rigid polyurethane foam according to any of claims 1 to 5, wherein the proportion of the polyetherols (b1), (b2) and, if present, (b3) in the compound (b) having groups which are reactive toward isocyanates is at least 80% by weight, based on the total weight of the compound (b) having groups which are reactive toward isocyanates.

7. The rigid polyurethane foam according to claim 6, wherein the proportion of the polyetherols (b1), (b2) and, if present, (b3) in the compound (b) having groups which are reactive toward isocyanates is 100% by weight, based on the total weight of the compound (b) having groups which are reactive toward isocyanates.

8. The rigid polyurethane foam according to any of claims 1 to 7, wherein the catalyst mixture (d) comprises dimethylcyclohexylamine (d1) and a bicyclic amine (d2) or dimethylcyclohexylamine (d1) and a monocyclic amine (d3).

9. The rigid polyurethane foam according to claim 8, wherein the ratio of dimethylcyclohexylamine (d1) and the bicyclic amine (d2) or dimethylcyclohexylamine (d1) and the monocyclic amine (d3) is 0.2-4:1.

10. The rigid polyurethane foam according to claim 9, wherein the ratio of dimethylcyclohexylamine (d1) and the bicyclic amine (d2) or dimethylcyclohexylamine (d1) and the monocyclic amine (d3) is 0.5-1.5:1.

11. The rigid polyurethane foam according to any of claims 1 to 10, wherein the isocyanate (a) has a viscosity at 25°C of less than 350 mPas.

12. The rigid polyurethane foam according to any of claims 1 to 11, wherein water is the sole blowing agent.

13. The rigid polyurethane foam according to any of claims 1 to 12, wherein the mean density of the polyurethane foam without reinforcing material is in the range 80 - 120 g/l.

14. The rigid polyurethane foam according to any of claims 1 to 13, wherein the reinforcing material is fiber glass mats.

15. The rigid polyurethane foam according to any of claims 1 to 14, wherein the isocyanate index is in the range from 100 to 400.

16. A process for producing rigid polyurethane foams comprising reinforcing material, where the mean density of the polyurethane foam without reinforcing material is in the range 50-200 g/l, which comprises mixing
a) isocyanates,
b) compounds having groups which are reactive toward isocyanates,
c) blowing agents comprising water,
d) a catalyst mixture comprising tertiary amines and, if appropriate,
e) further additives,
to form a reaction mixture, applying the reaction mixture to reinforcing material and curing it to give the polyurethane foam, wherein
the isocyanates (a) have a viscosity of less than 500 mPas at 25°C and
the compounds (b) having groups which are reactive toward isocyanates comprise a polyetherol (b1) having a functionality of 4 or more and a viscosity at 25°C of 10 000 mPas or less and a polyetherol (b2) having a functionality of 3 or less and a viscosity at 25°C of 500 mPas or less.

17. The process according to claim 16, wherein the rigid foam comprising reinforcing material is produced continuously on a belt.

18. The process according to claim 17, wherein the reinforcing material is firstly fed continuously onto the belt and the reaction mixture is subsequently fed continuously onto the reinforcing material.

19. The use of a rigid polyurethane foam according to any of claims 1 to 15 for the insulation of liquefied natural gas tanks, in particular on ships.

## Revendications

1. Mousse rigide de polyuréthane, contenant un renfort, la densité moyenne de la mousse polyuréthane sans renfort se situant dans la plage de 50-200 g/l pouvant être obtenue par mélange
a) d'isocyanates
b) de composés à groupes réactifs vis-à-vis d'isocyanates
c) d'un agent d'expansion, contenant de l'eau,
d) d'un mélange de catalyseurs, contenant des amines tertiaires et éventuellement
e) d'autres additifs,
application du mélange réactionnel sur un renfort et durcissement du mélange réactionnel,
les isocyanates (a) ayant une viscosité de moins de 500 mPa.s à 25 °C et
les composés (b) à groupes réactifs vis-à-vis d'isocyanates contenant un polyétherol (b1) ayant une fonctionnalité de 4 ou plus et une viscosité à 25 °C de 10 000 mPa.s ou moins et un polyétherol (b2) ayant une fonctionnalité de 3 ou moins et une viscosité à 25 °C de 500 mPa.s ou moins.

2. Mousse rigide de polyuréthane selon la revendication 1, **caractérisée en ce que** la viscosité du polyétherol (b2) à 25 °C est de 300 mPa.s ou moins.

3. Mousse rigide de polyuréthane selon la revendication 1 ou 2, **caractérisée en ce que** la proportion du polyétherol (b1) vaut de 30 à 80, de préférence de 40 à 70% en poids, par rapport au poids total des composants (b1) et (b2).

4. Mousse rigide de polyuréthane selon l'une quelconque des revendications 1 à 3, **caractérisée en ce que** le polyétherol (b2) a été préparé exclusivement à partir de molécules difonctionnelles d'amorçage.

5. Mousse rigide de polyuréthane selon l'une quelconque des revendications 1 à 4, **caractérisée en ce que** les composés (b) à groupes réactifs vis-à-vis d'isocyanates contiennent en outre (b3) un polyesterol ayant une viscosité à 25 °C de 2 000 mPa.s ou moins.

6. Mousse rigide de polyuréthane selon l'une quelconque des revendications 1 à 5, **caractérisée en ce que** la teneur en polyétherols (b1), (b2) et éventuellement (b3) du composé (b) à groupes réactifs vis-à-vis d'isocyanates est d'au moins 80% en poids, par rapport au poids total du composé (b) à groupes réactifs vis-à-vis d'isocyanates.

7. Mousse rigide de polyuréthane selon la revendication 6, **caractérisée en ce que** la teneur en polyétherols (b1), (b2) et éventuellement (b3) du composé (b) à groupes réactifs vis-à-vis d'isocyanates est de 100% en poids, par rapport au poids total du composé (b) à groupes réactifs vis-à-vis d'isocyanates.

8. Mousse rigide de polyuréthane selon l'une quelconque des revendications 1 à 7, **caractérisée en ce que** le mélange de catalyseurs (d) contient de la diméthylcyclohexylamine (d1) et une amine bicyclique (d2) ou de la diméthylcyclohexylamine (d1) et une amine monocyclique (d3).

9. Mousse rigide de polyuréthane selon la revendication 8, **caractérisée en ce que** le rapport de la diméthylcyclohexylamine (d1) et de l'amine bicyclique (d2) ou de la diméthylcyclohexylamine (d1) et de l'amine monocyclique (d3) va de 0,2 à 4:1.

10. Mousse rigide de polyuréthane selon la revendication 9, **caractérisée en ce que** le rapport de la diméthylcyclohexylamine (d1) et de l'amine bicyclique (d2) ou de la diméthylcyclohexylamine (d1) et de l'amine monocyclique (d3) va de 0,5 à 1,5:1.

11. Mousse rigide de polyuréthane selon l'une quelconque des revendications 1 à 10, **caractérisée en ce que** l'isocyanate (a) présente une viscosité à 25 °C de moins de 350 mPa.s.

12. Mousse rigide de polyuréthane selon l'une quelconque des revendications 1 à 11, **caractérisée en ce que** l'eau est le seul agent d'expansion.

13. Mousse rigide de polyuréthane selon l'une quelconque des revendications 1 à 12, **caractérisée en ce que** la densité moyenne de la mousse de polyuréthane sans renfort se situe dans la plage de 80 - 120 g/l

14. Mousse rigide de polyuréthane selon l'une quelconque des revendications 1 à 13, **caractérisée en ce que** le renfort consiste en des mats de fibres de verre.

15. Mousse rigide de polyuréthane selon l'une quelconque des revendications 1 à 14, **caractérisée en ce que** l'indice d'isocyanate se situe dans la plage de 100 à 400.

16. Procédé pour la production de mousses rigides de polyuréthanne, la densité moyenne de la mousse de polyuréthanne sans renfort se situant dans la plage de 50-200 g/l, contenant un renfort, dans lequel on mélange
a) des isocyanates avec
b) des composés à groupes réactifs vis-à-vis d'isocyanates,
c) un agent d'expansion, contenant de l'eau,
d) un mélange de catalyseurs, contenant des amines tertiaires et éventuellement
e) d'autres additifs,
pour obtenir un mélange réactionnel, on l'applique sur un renfort et on le fait durcir pour obtenir la mousse rigide de polyuréthane,
les isocyanates (a) ayant une viscosité de moins de 500 mPa.s à 25 °C et
les composés (b) à groupes réactifs vis-à-vis d'isocyanates contenant un polyétherol (b1) ayant une fonctionnalité de 4 ou plus et une viscosité à 25 °C de 10 000 mPa.s ou moins et un polyétherol (b2) ayant une fonctionnalité de 3 ou moins et une viscosité à 25 °C de 500 mPa.s ou moins.

17. Procédé selon la revendication 16, **caractérisé en ce que** la mousse rigide, contenant un renfort, est produite en continu sur une bande.

18. Procédé selon la revendication 17, **caractérisé en ce que** d'abord on place en continu le renfort sur la bande, et ensuite on dépose en continu le mélange réactionnel sur le renfort.

19. Utilisation d'une mousse de polyuréthane selon l'une quelconque des revendications 1 à 15, pour l'isolation de réservoirs de gaz naturel liquide, en particulier sur des bateaux.
